# EUROPEAN PATENT APPLICATION

(11) **EP 4 653 199 A1**
(43) Date of publication of application: **26.11.2025**
(21) Application number: 25382510.3
(22) Date of filing: 21.05.2025
(51) Int. Cl.: B41J 3/407, B41J 2/21, B41J 3/54, B41J 11/00, B41M 3/00, B41J 2/50, B41J 2/515, G06K 15/02

(54) **DIGITAL PRINTING MACHINE AND OPERATION METHOD THEREOF**

(30) Priority: 24.05.2024 EP 24382553
(71) Applicant: COMEXI GROUP INDUSTRIES, SAU, 17457 Riudellots de la Selva, Girona (ES)
(72) Inventor: SAHUN PERES, Jordi, 17462 Bordils (ES); QUINTANA VILÀ, Joaquim, 17411 Vidreres (ES)
(74) Representative: Torner, Juncosa I Associats, SL

(57) **Abstract**

Digital printing machine and operation method thereof, the digital printing machine comprising a main printing module (70) and an auxiliary printing module (50) associated in succession with the same web conveyance path, the auxiliar printing module comprising an auxiliar ink-jet printing unit (10), an analogue printing unit (20), and at least one auxiliar drying/curing unit (30) controlled by a control unit storing an opaque base image (43), and an operation method of the auxiliary printing unit comprising supplying the auxiliar ink-jet printing unit (10) with first ink (11) and the second analogue printing unit (20) with second ink (21) of the same color; the control unit implementing a printing configuration of the auxiliary printing module (50) between a first printing configuration, where the opaque base image (43) is printed solely with the auxiliar ink-jet printing unit (10), and a second printing configuration where the opaque base image (43) is printed solely with the analogue printing unit (20).

## Description

### Technical field

The present invention is directed towards a digital printing machine comprising a main printing module with main ink-jet printing units for printing all but one of multiple monochrome images constitutive of the polychrome image to be printed, and also comprising an auxiliary printing module for printing an opaque base image also constitutive of the polychrome image with a first ink or a second ink with an improved opacity. The proposed invention is also directed towards an operation method of such digital printing machine.

The quality of print on those transparent, translucent or colored web substrates is highly dependent on the color of the opaque base image, therefore it is vitally important to be able to obtain a printed opaque base image with a good opacity value. An opaque base image with a good opacity value improves the overall print quality, improves the legibility of small text, barcodes or QR codes and helps to meet color target specifications.

The auxiliary printing module is adapted to print an opaque base image with opaque ink to the web substrate, which will be later overprinted with the monochrome images with other colors by a main printing unit of the printing machine, or to sequentially print the monochrome images with other colors on a backside of a transparent web material, which will be later overprinted with the opaque base image, being the polychrome image visible through the transparent web substrate.

The proposed auxiliary printing unit comprises an auxiliar ink-jet printing unit feed with a first ink and an analogue printing unit feed with a second ink, both first and second inks being of the same color, and the auxiliary printing unit being adapted to print the opaque base image of the print job either with the auxiliar ink-jet printing unit with the first ink or with the analogue printing unit with the second ink, whichever is the most convenient or cost-effective for the current printing job.

### Background of the Invention

Hybrid printing machines for printing a continuous web substrate with ink-jet printing units and also analog printing units are already known, for example by documents EP4155078A1, EP3251845A1 and EP3831603A1.

According to those documents, a polychrome image, made of different overlapped monochrome images, can be printed in those hybrid printing machines by printing some monochrome images with the analog printing units and some monochrome images with the ink-jet printing units.

The analogue printing units produce a cheaper printing than the ink-jet printing units, but the ink-jet printing units can easily modify the image to be printed, being the ideal technology for printing texts, bar codes, QR codes, special offers or promotions and other information to be printed as part of the polychrome image which can suffer modifications over time.

Therefore, according to those prior art documents, the ink-jet printing units are used only for printing those elements which can suffer modifications over time, typically as some of the last layers to be printed on the web substrate, being the rest of the monochrome images to be printed performed by the analogue printing units, particularly the opaque base image producing an opaque layer as a substrate for the subsequent monochrome images to be printed.

None of those documents proposes a hint towards a digital printing machine allowing the printing of the opaque base image either with an ink-jet printing unit or with an analogue printing unit depending on the circumstances.

### Description of the Invention

The present invention concerns, according to a first aspect of the invention, to an operation method of a digital printing machine comprising a main printing module and an auxiliary printing module associated in succession with the same web conveyance path for printing an opaque base image on a web substrate, as defined in claim 8.

The proposed method comprises:
providing the auxiliary printing module including one auxiliar ink-jet printing unit, transversal to a web conveyance path and adapted to print a first ink on a web conveyed through the web conveyance path;
providing the main printing module with a plurality of main ink-jet printing units transversal to the web conveyance path, each feed with an ink of a color different to the first and second inks and adapted to sequentially printing the multiple monochrome images;
supplying, to the control unit, a polychrome image to be printed composed of multiple monochrome images to be printed overlapped in a predefined order, one of the monochrome images to be printed being an opaque base image to be printed by the auxiliary printing module.

The polychrome image to be printed is provided to the control unit as part of the digital information of a printing job to be executed. The opaque base image provides an opaque base of color on which the other monochrome images can be later printed on top thereof forming as a result the polychrome image. Alternatively, when the web substrate is transparent, the opaque base image can be printed on top of the previously printed monochrome images, resulting in a polychrome image which can be seen through the transparent web substrate.

This opaque base image is particularly relevant when the web substrate is transparent, translucent or when is a colored web substrate.

The quality of print on those transparent, translucent or colored web substrates is highly dependent on the color of the opaque base image, therefore it is vitally important to be able to obtain a printed opaque base image with a good opacity value. An opaque base image with a good opacity value improves the overall print quality, improves the legibility of small text, barcodes or QR codes and helps to meet color target specifications.

It is considered that a printed image with an opacity value above 80%, or preferably above 90%, measured according to ISO23498, is an opaque base image.

The proposed auxiliary printing module is specially adapted to print such opaque base image.

An ink-jet printing unit is a unit extending from one side edge of the web conveyance path to the opposed lateral edge of the web conveyance path. The ink-jet printing unit is typically made of several adjacent ink-jet heads forming a printing bar, each ink-jet head being intended to eject controlled amounts of ink droplets in controlled positions on the web substrate conveyed through the web conveyance path below the ink-jet printing unit, producing a predefined image. The ejection of the droplets is controlled by the control unit in a precise manner to reproduce an image stored in digital format in a control unit with a precise distribution.

Each ink-jet printing unit is adapted to print with a single color, all the ink-jet heads of the same ink-jet printing unit being fed with the same ink of the same color.

According to the proposed method, the auxiliary printing module is provided comprising one analogue printing unit, transversal to the web conveyance path and fed with a second ink of the same color than the first ink to print on the web conveyed through the web conveyance path, and at least one auxiliar drying/curing unit downstream the auxiliar ink-jet printing unit and the analogue printing unit.

The method further comprises selecting a printing configuration of the auxiliary printing module between a first printing configuration, where the opaque base image is printed solely with the auxiliar ink-jet printing unit with the first ink while the analogue printing unit is disabled, and a second printing configuration where the opaque base image is printed solely with the analogue printing unit with the second ink while the auxiliar ink-jet printing unit is disabled, and implementing, or implementing after confirmation by an operator, the selected printing configuration.

An analogue printing unit is a printing unit typically provided with multiple parallel cylinders contacting to each other. The analogue printing unit can be, for example, an offset printing unit, a flexographic printing unit or a letterpress printing unit.

In any case, the analogue printing unit includes a cylinder with a sleeve including a surface treatment reproducing the image to be printed, typically engraved or with a hydrophobic treatment. The cylinder with the sleeve is fed with ink through an inking train of cylinders, which transfers a thin uniform layer of ink on the regions of the sleeve reproducing the image to be printed from an ink fountain. Optionally, the sleeve is also fed with controlled amounts of water on the regions not reproducing the image to be printed, where a hydrophilic treatment has been applied.

The cylinder with the sleeve can be in direct contact with the surface of the web substrate or can be in contact with a rubber cylinder adapted to transfer the ink from the surface of the sleeve to the surface of the web substrate in contact with the rubber cylinder.

In any case, the cylinder in contact with the web is a cylinder extending from one lateral edge of the web conveyance path to the opposed edge of the web conveyance path.

Typically, the opaque base image is black or white, coinciding with the color of the opaque base image to be printed stored in the control unit, but other colors are also possible.

According to the above, the auxiliar ink-jet printing unit and the analogue printing unit can be both used alternatively to print the same opaque base image in the same color, using one or the other depending on the convenience. To achieve this result, the auxiliar ink-jet printing unit shall be supplied with the first ink and the second analogue printing unit shall be supplied with the second ink, being the first ink and the second ink of the same color but typically having different compositions adapted to the different printing requirements of the two different technologies. Two inks shall be considered to be of the same color when they are identified by the same color name, or when most people cannot differentiate between them, or when the wavelength and intensity of both colors is approximately or exactly the same.

The auxiliary printing module can be provided upstream the main printing module for printing the monochrome images on top of the base opaque image, or downstream the main printing module for printing the base opaque image on top of the monochrome images on a transparent web substrate. It will be understood that upstream and downstream is referred to the direction of the conveyance of the webs trubstrate along the web path.

Optionally, the method further comprises supplying to the control unit, or calculating by the control unit, first ink thickness of the first ink and second ink thickness of the second ink required to reach a given target opacity value of the opaque base image, and wherein the implementation of the first printing configuration comprises printing the first ink with first ink thickness and wherein the implementation of the second printing configuration comprises printing the second ink with second ink thickness.

The first ink thickness and the second ink thickness can be automatically calculated by the control unit considering the given target opacity value of the opaque base image and a given first thickness/opacity factor of the first ink and a given second thickness/opacity factor of the second ink.

According to the above, the control unit can store, as part of the digital information, the first ink thickness, which is the required thickness of first ink necessary to reach a target opacity value of the opaque base image, and the second ink thickness, which is the required thickness of second ink necessary to reach a target opacity value of the opaque base image.

The first ink thickness and the second ink thickness can be optionally calculated by the control unit considering the given target opacity value. For example, to make such calculation, the control unit can be supplied a first thickness/opacity factor of the first ink and a second thickness/opacity factor of the second ink. The thickness/opacity factor is a value, graphic, formula, table or the like linking the thickness of the printed ink with the resulting opacity, so that the control unit, knowing the target opacity value, can calculate the required thickness of the first and second inks.

Then, one printing configuration of the auxiliary printing unit for printing the opaque base image is selected, for example automatically by the control unit, between the first printing configuration and the second printing configuration, which is later implemented automatically or implemented after confirmation of an operator.

The method may further comprise calculating, by the control unit, an estimated printing cost of the opaque base image using the first ink and using the second ink. This calculation can be made considering at least the following parameters:
surface area of each copy of the opaque base image to be printed, given to the control unit or calculated by the control unit through the analysis of the opaque base image to be printed;
first cost per volume unit or per weight unit of the first ink and a second cost per volume unit or per weight unit of a second ink, given to the control unit.

The surface area of the opaque base image to be printed can be easily calculated by the control unit, measuring the colored area of the opaque base image to be printed stored in the control unit as part of the digital information of the print job, or can be given to the control unit as part of said digital information.

Knowing the total surface area to be printed, which will be the same for both the first and second inks, and the first ink thickness and the second ink thickness, the control unit can easily calculate the total volume of first ink and of second ink consumed to print the opaque base image.

Other parameters can be also considered, such the evaporation ratio of the first ink and of the second ink during the curing or drying, or the volume/weight ratio of the first ink and the second ink, provided to the control unit as part of the digital information. Those other parameters can be used by the control unit to calculate with precision the total volume or weight of the first and second ink consumed to print the opaque base image.

The control unit will store, as part of the digital information, also the cost of the first ink and of the second ink per volume unit or per weight unit.

Knowing the total volume or weight of the first ink and of the second ink required to print the opaque base image during the print job with the target opacity value and knowing the cost per volume unit or per weight unit, the control unit can easily calculate the cost of printing the opaque base image using the auxiliar ink-jet printing unit or the analogue printing unit.

With this information, the control unit can automatically select, or can suggest to an operator, the most cost-effective printing configuration of the auxiliary printing module considering the estimated printing cost, between the first printing configuration and the second printing configuration described above.

Optionally, the estimated printing cost using the analogue printing unit with the second ink can be calculated considering a given printing sleeve preparation cost for the analogue printing unit and number of copies of the opaque base image to be printed, given to the control unit, which will be added to the total cost of printing with the second ink previously calculated.

The printing sleeve preparation cost is the cost associated with the creation of a sleeve including on its surface a surface treatment defining the image to be printed and optionally also the cost of handling and installing in the analog printing unit such sleeve.

The number of copies of the opaque base image to be printed is the number of times that the opaque base image has to be printed in succession along the web substrate during the current print job. This information is given to the control unit as part of the digital information.

Knowing the number of copies of the opaque base image to be printed, the control unit can easily calculate the cost, for each opaque base image printed, of the sleeve preparation.

The printing with the auxiliar ink-jet printing unit will not include such added cost, therefore specially for print jobs with low number of copies, will reduce the cost per printed unit using the auxiliar ink-jet printing unit compared with the printing using the analogue printing unit.

The present invention also proposes, according to a second aspect of the invention, a digital printing machine comprising a main printing module and an auxiliary printing module associated in succession with the same web conveyance path, as described in claim 1.

The proposed auxiliary printing module comprises one auxiliar ink-jet printing unit, transversal to a web conveyance path and adapted to print a first ink on a web conveyed through the web conveyance path.

The auxiliar ink-jet printing unit is fed with a first ink, typically from a first ink deposit connected by pipes to the auxiliar ink-jet printing unit.

The main printing module includes a plurality of main ink-jet printing units transversal to the web conveyance path, each feed with an ink of a color and adapted to sequentially printing the multiple monochrome images, and at least one main drying/curing unit downstream the main ink-jet printing units.

The digital printing machine further comprises a control unit storing a polychrome image to be printed composed of multiple monochrome images to be printed overlapped in a predefined order, one of first of the monochrome images to be printed being the opaque base image.

In a manner not known in the state of the art, the auxiliary printing module further comprises one analogue printing unit, transversal to the web conveyance path and fed with a second ink of the same color than the first ink to print on the web conveyed through the web conveyance path, and at least one auxiliar drying/curing unit downstream the auxiliar ink-jet printing unit and the analogue printing unit.

The control unit is configured to control the auxiliary printing module to print the opaque base image either with the auxiliar ink-jet printing unit while maintaining disabled the analogue printing unit, implementing a first printing configuration, or with the analogue printing unit while maintaining disabled the auxiliar ink-jet printing unit implementing a second printing configuration.

This allows the use of the auxiliar ink-jet printing unit and of the analogue printing unit as different alternative technologies to print the same opaque base image depending on the requirements of the print job.

The control unit can store digital information of a first ink thickness of the first ink and of a second ink thickness of the second ink required to reach a target opacity value of the opaque base image, or stores digital information of a target opacity value of the opaque base image and a first thickness/opacity factor of the first ink and a second thickness/opacity factor of the second, the control unit being configured to calculate the a first ink thickness of the first ink and a second ink thickness of the second ink required to reach the stored target opacity value of the opaque base image.

The control unit is configured to operate the auxiliary printing module either in a first printing configuration, where the opaque base image is printed solely with the auxiliar ink-jet printing unit with the first ink with the first ink thickness while the analogue printing unit is disabled, or on a second printing configuration where the opaque base image is printed solely with the analogue printing unit with the second ink with the second ink thickness while the auxiliar ink-jet printing unit is disabled.

Optionally, the main printing module is supported in a main chassis, and the auxiliary printing module is supported in an auxiliary chassis adjacent to, or releasable attached to, the main chassis. Thanks to this feature, the auxiliary printing module is installable downstream or upstream the main printing module, depending on the order in which the monochrome images and the base opaque image have to be printed, providing a flexible digital printing machine. Each of the main ink-jet printing units can be constituted of multiple adjacent printing heads with a printing resolution different or higher than the printing resolution of multiple adjacent printing heads constitutive of the auxiliar ink-jet printing unit. The main and the auxiliar ink-jet printing units have to print at the same speed, but the auxiliar ink-jet printing units have to print with a greater thickness to obtain the opaque base image. To achieve this thicker printing at the same speed the auxiliar ink-jet printing unit has to drop bigger ink drops than the main ink-jet printing units and therefore having lower resolution.

The first ink and the second ink, used to print the opaque base image, shall be special inks adapted to be particularly opaque, typically with an opacity value above 80%, or preferably above 90%, measured according to ISO23498.

Those opaque inks are typically denser and/or require more thickness than other printing inks, such colored inks intended to print images overlapped to the opaque base image.

For that reason, the ink-jet heads constitutive of the auxiliar ink-jet printing unit are specially adapted to print such kind of thicker and/or denser ink to obtain an opaque base image, requiring a different printing resolution than the main ink-jet heads of the main ink-jet printing units.

Typically, the ink-jet heads of the auxiliar ink-jet printing unit have a lower resolution than the main ink-jet heads, the auxiliar ink-jet printing unit printing bigger and thicker ink dots than the main ink-jet printing units.

The auxiliar ink-jet printing unit and the analogue printing unit can include adjustment actuators integrated therein configured to modify the thickness of the first and second inks printed by auxiliar ink-jet printing unit and by the analogue printing unit.

The auxiliary printing module can further comprise an optic sensor associated with the web conveyance path downstream the auxiliar ink-jet printing unit and downstream the analogue printing unit. The optic sensor will be configured to measure a first thickness of the first ink or a first measured opacity value of the first ink, or a second thickness of the second ink or a second measured opacity value of the second ink printed on the web conveyed through the web conveyance path.

In this case, the control unit can configured to calculate, in a closed loop, adjustments of the adjustment actuators required to reach a predefined target opacity values calculated considering the first or second thickness or the first or second measured opacity values provided by the optic sensor and a given first or second thickness or first or second target opacity value of the first ink and of the second ink, and to control said adjustment actuators to implement said adjustments.

### Brief description of the Figures

The foregoing and other advantages and features will be more fully understood from the following detailed description of an embodiment with reference to the accompanying drawings, to be taken in an illustrative and non-limitative manner, in which:

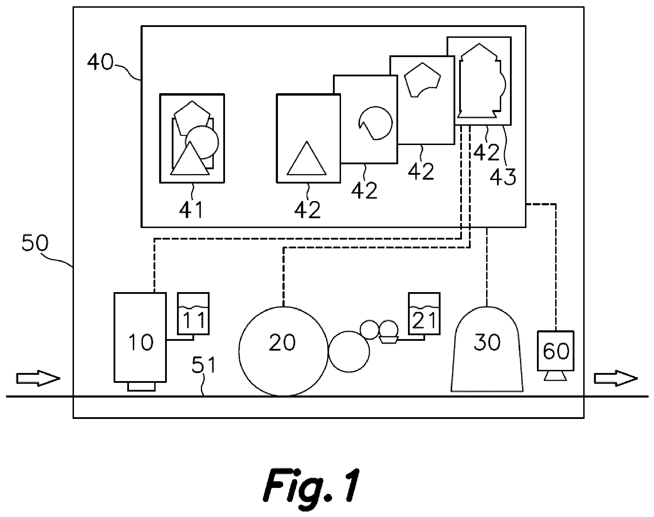

Fig. 1 shows a schematic view of the proposed auxiliary printing module for printing an opaque base image;

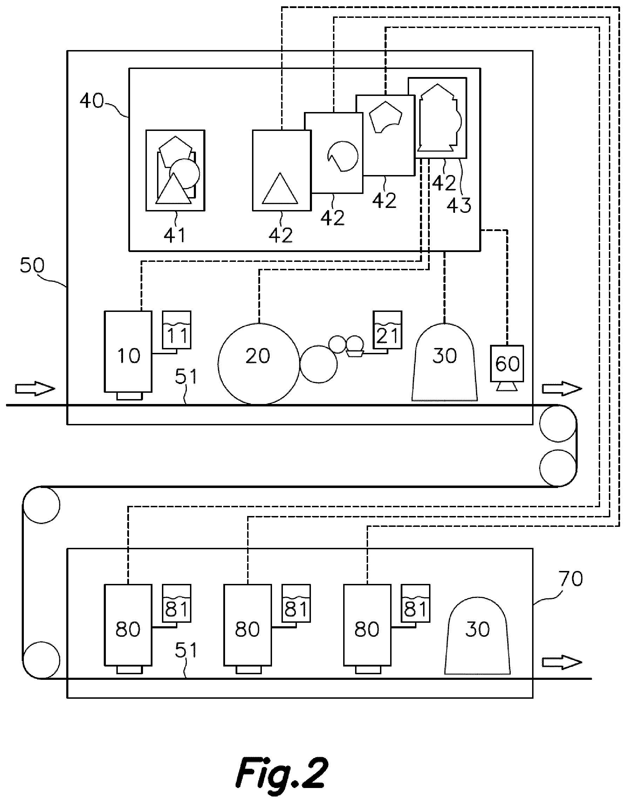

Fig. 2 shows a schematic view of the digital printing machine including the proposed auxiliary printing module upstream a main printing module.

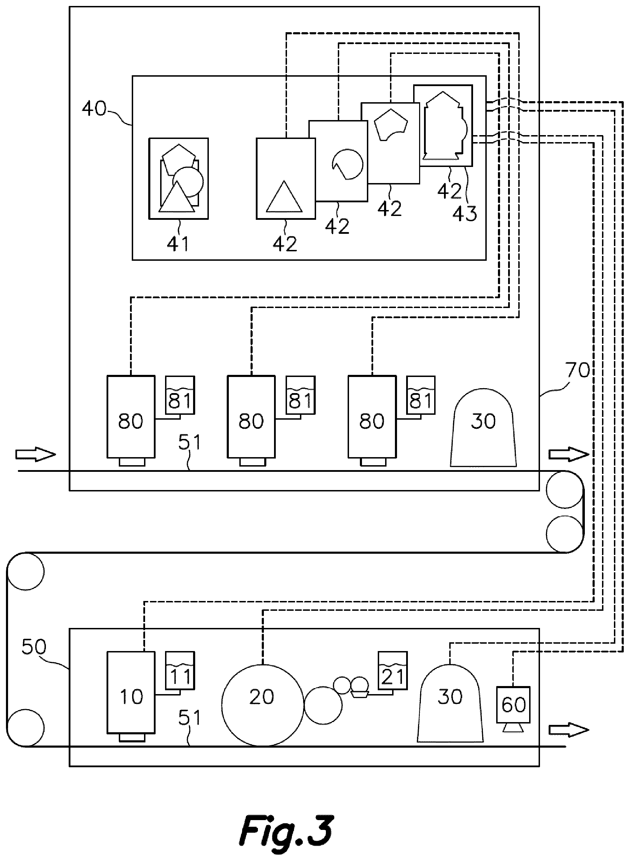

Fig. 3 shows a schematic view of the digital printing machine including the proposed auxiliary printing module downstream a main printing module.

### Detailed Description of the Invention and of particular embodiments

According to a first aspect, the present invention is directed towards a method of operation of an auxiliary printing module for printing an opaque base image on a web substrate.

The proposed method is implemented in an auxiliary printing module 50, controlled by a control unit 40, the auxiliary printing module being provided including one auxiliar ink-jet printing unit 10, transversal to a web conveyance path and adapted to print a first ink 11 on a web 51 conveyed through the web conveyance path, and one analogue printing unit 20, transversal to the web conveyance path and adapted to print a second ink 21 on the web 51 conveyed through the web conveyance path, and at least one auxiliar drying/curing unit 30 downstream the auxiliar ink-jet printing unit 10 and the analogue printing unit 20.

The auxiliary printing module 50 can be provided upstream or downstream the main printing module 70.

The method comprises supplying, to the control unit 40, a polychrome image 41 to be printed composed of multiple monochrome images 42 to be printed overlapped in a predefined order, one of the monochrome images to be printed being the opaque base image 43. Typically, the opaque base image 43 is the first monochrome image to be printed and is typically printed in solid white or solid black color.

The proposed method further comprises supplying, to the auxiliar ink-jet printing unit 10, the first ink 11 and supplying to the second analogue printing unit 20, the second ink 21 being the first ink 11 and the second ink 21 of the same color, typically solid white or solid black.

The method further comprises selecting a printing configuration of the auxiliary printing module 50 between a first printing configuration, where the opaque base image 43 is printed solely with the auxiliar ink-jet printing unit 10 with the first ink 11 while the analogue printing unit 20 is disabled, and a second printing configuration where the opaque base image 43 is printed solely with the analogue printing unit 20 with the second ink 21 while the auxiliar ink-jet printing unit 10 is disabled, and implementing, or implementing after confirmation by an operator, the selected printing configuration.

The method can further comprise supplying to the control unit 40, first ink thickness of the first ink 11 and second ink thickness of the second ink 21 required to reach a given target opacity value of the opaque base image 43.

Alternatively, the first ink thickness and second ink thickness are calculated by the control unit 40. Said calculation can be made automatically by the control unit 40 considering the given target opacity value of the opaque base image 43 and a given first thickness/opacity factor of the first ink 11 and a given second thickness/opacity factor of the second ink 21.

Then, the method may comprises selecting a printing configuration of the auxiliary printing module 50 between a first printing configuration, where the opaque base image 43 is printed solely with the auxiliar ink-jet printing unit 10 with the first ink 11 with the first ink thickness while the analogue printing unit 20 is disabled, and a second printing configuration where the opaque base image 43 is printed solely with the analogue printing unit 20 with the second ink 21 with the second ink thickness while the auxiliar ink-jet printing unit 10 is disabled.

Finally, the selected printing configuration is implemented, or is implemented after confirmation by an operator, on the auxiliar ink-jet printing unit 10 and on the analogue printing unit 20, printing the opaque base image only using one of those printing units of the auxiliary printing unit.

Optionally, the method also comprises calculating, by the control unit 40, an estimated printing cost of the opaque base image 43 using the first ink 11 and using the second ink 21 considering at least:
surface area of each copy of the opaque base image 43 to be printed, given to the control unit 40 or calculated by the control unit 40 through the analysis of the opaque base image 43;
first cost per volume unit or per weight unit of the first ink 11 and a second cost per volume unit or per weight unit of a second ink 21, given to the control unit 40;

In this case, the printing configuration selected can be the most cost-effective configuration between the first printing configuration and the second printing configuration considering the estimated printing cost.

Said estimated printing cost of the analogue printing unit using the second ink 21 can be calculated considering also a given printing sleeve preparation cost for the analogue printing unit 20, and a number of copies of the opaque base image 43 to be printed, given to the control unit 40, spreading the preparation cost the printing sleeve over all the copies to be printed.

According to an additional embodiment, the estimated printing cost can be calculated also considering a drying estimated cost calculated, by the control unit 40, considering the surface area of the opaque base image 43, the first and second thickness of the first and second inks 11, 21 and a first drying cost per thickness unit of the first ink 11 to be dried by the at least one auxiliar drying/curing unit 30 and a second drying cost per thickness unit of the second ink 21 to be dried by the at least one auxiliar drying/curing unit 30 given to the control unit 40.

The final step of implementing the selected first or second printing configuration may include governing, by the control unit 40, adjustment actuators integrated in the auxiliar ink-jet printing unit 10 and in the analogue printing unit 20, the adjustment actuators being actuators adapted to modify the thickness of the first and second inks 11, 21 printed by auxiliar ink-jet printing unit 10 and in the analogue printing unit 20, to achieve the first ink thickness or the second ink thickness.

According to an additional embodiment, the method can further include obtaining, from an optic sensor 60 associated with the web conveyance path downstream the auxiliar ink-jet printing unit 10 and the analogue printing unit 20, a first thickness of the first ink 11, a first measured opacity value of the first ink 11, a second thickness of the second ink 21 and/or a second measured opacity value of the second ink 21 printed on the web 51 conveyed through the web conveyance path by the auxiliary printing module 50.

Then, the control unit 40 can implement adjustments of the adjustment actuators required to reach the target opacity values calculated in a closed loop, considering the first or second thickness and/or the first or second measured opacity values provided by the optic sensor 60.

According to a second aspect, the present invention can be also directed towards an auxiliary printing module for printing an opaque base image on a web substrate.

Said auxiliary printing module will include one auxiliar ink-jet printing unit 10, transversal to a web conveyance path and fed with a first ink 11 to print on a web 51 conveyed through the web conveyance path, and one analogue printing unit 20, transversal to the web conveyance path and fed with a second ink 21 to print on the web 51 conveyed through the web conveyance path, and at least one auxiliar drying/curing unit 30 downstream the auxiliar ink-jet printing unit 10 and the analogue printing unit 20.

The auxiliary printing module will also include a control unit 40 governing the auxiliar ink-jet printing unit 10, the analogue printing unit 20 and the at least one auxiliar drying/curing unit 30, the control unit 40 including a polychrome image 41 to be printed composed of multiple monochrome images 42 to be printed overlapped in a predefined order, one of the monochrome images 42 to be printed being the opaque base image 43.

The auxiliar ink-jet printing unit 43 being fed with a first ink 11 and the second analogue printing unit being fed with a second ink 21, the first ink 11 and the second ink (21) being of the same opaque color, for example being both solid white or both solid black.

The control unit 40 stores digital information of a first ink thickness of the first ink 11 and of a second ink thickness of the second ink 21 required to reach a target opacity value of the opaque base image 43, or stores digital information of a target opacity value of the opaque base image 43 and a first thickness/opacity factor of the first ink 11 and a second thickness/opacity factor of the second ink 21.

The control unit 40 will be configured to calculate a first ink thickness of the first ink 11 and a second ink thickness of the second ink 21 required to reach the stored target opacity value of the opaque base image 43.

The control unit 40 will be also configured to operate the auxiliary printing module 50 either in a first printing configuration, where the opaque base image 43 is printed solely with the auxiliar ink-jet printing unit 10 with the first ink 11 with the first ink thickness while the analogue printing unit 20 is disabled, or on a second printing configuration where the opaque base image 43 is printed solely with the analogue printing unit 20 with the second ink 21 with the second ink thickness while the auxiliar ink-jet printing unit 10 is disabled.

According to an optional embodiment of the present invention, the auxiliary printing module 50 is integrated in a digital printing machine also including a main printing module 70 associated with the web conveyance path downstream the auxiliary printing module 50 or upstream the auxiliary printing module 50.

The main printing module 70 includes a plurality of main ink-jet printing units 80 transversal to the web conveyance path, each feed with an ink 81 of a color different to the first and second inks 11, 21 and different to each other. The main ink-jet printing units 80 are adapted to sequentially printing the multiple monochrome images 42 of the control unit 40, excluding the opaque base image, mostly over the opaque base image 43 already printed by the auxiliary printing unit, in the order defined in the control unit 40.

Optionally, each of the main ink-jet printing units 80 is constituted by multiple adjacent printing heads with a printing resolution different or higher than the resolution of multiple adjacent printing heads constitutive of the auxiliar ink-jet printing unit 10. This is because the opaque base image has to be opaque and requires a thicker thickness of printing and/or a denser ink, this opaque base image being easier to print with printing heads of a lower resolution which can print bigger dots.

According to an additional embodiment, the auxiliar ink-jet printing unit 10 and the analogue printing unit 20 can include adjustment actuators integrated therein configured to modify the thickness of the first and second inks 11, 21 printed by auxiliar ink-jet printing unit 10 and by the analogue printing unit 20.

Optionally, the auxiliary printing module 50 further comprises an optic sensor 60 associated with the web conveyance path downstream the auxiliar ink-jet printing unit 10 and downstream the analogue printing unit 20. The optic sensor 60 may be configured to measure a first thickness of the first ink 11 or a first measured opacity value of the first ink 11, or a second thickness of the second ink 21 or a second measured opacity value of the second ink 21 printed on the web 51 conveyed through the web conveyance path.

According to an additional embodiment, the control unit 40 can be configured to calculate, in a closed loop, adjustments of the adjustment actuators required to reach the target opacity values calculated considering the first or second thickness or the first or second measured opacity values provided by the optic sensor 60 and a given first or second thickness or first or second target opacity value of the first ink 11 and of the second ink 21, and to control said adjustment actuators to implement said adjustments.

## Claims

1. Digital printing machine comprising a main printing module (70) and an auxiliary printing module (50) associated in succession with the same web conveyance path, wherein
the auxiliary printing module (50) comprises one auxiliar ink-jet printing unit (10), transversal to a web conveyance path and fed with a first ink (11) to print on a web (51) conveyed through the web conveyance path;
the main printing module (70) includes a plurality of main ink-jet printing units (80) transversal to the web conveyance path, each feed with an ink (81) of a color and adapted to sequentially printing the multiple monochrome images (42), and at least one main drying/curing unit downstream the main ink-jet printing units (80);
a control unit (40) storing a polychrome image (41) composed of multiple monochrome images (42) to be printed overlapped in a predefined order, one of the monochrome images (42) being an opaque base image (43) to be printed by the auxiliary printing unit (50);
**characterized in that**:
the auxiliary printing module (50) further comprises one analogue printing unit (20), transversal to the web conveyance path and fed with a second ink (21) of the same color than the first ink to print on the web (51) conveyed through the web conveyance path, and at least one auxiliar drying/curing unit (30) downstream the auxiliar ink-jet printing unit (10) and the analogue printing unit (20);
the control unit (40) is configured to control the auxiliary printing module (50) to print the opaque base image (43) either with the auxiliar ink-jet printing unit (10) while maintaining disabled the analogue printing unit (20) or with the analogue printing unit (20) while maintaining disabled the auxiliar ink-jet printing unit (10).

2. The digital printing machine according to claim 1 wherein the main printing module (70) is supported in a main chassis, and the auxiliary printing module (50) is supported in an auxiliary chassis adjacent to, or releasable attached to, the main chassis.

3. The digital printing machine according to claim 2, wherein auxiliary printing module (50) is installable downstream or upstream the main printing module (70).

4. The digital printing machine according to any preceding claim wherein each of the main ink-jet printing units (80) is constituted by multiple adjacent printing heads with a printing resolution different or higher than the resolution of multiple adjacent printing heads constitutive of the auxiliar ink-jet printing unit (10).

5. The digital printing machine according to any preceding claim wherein the auxiliar ink-jet printing unit (10) and the analogue printing unit (20) include adjustment actuators integrated therein configured to modify the thickness of the first and second inks (11, 21) printed by auxiliar ink-jet printing unit (10) and by the analogue printing unit (20).

6. The digital printing machine according to any preceding claim wherein the auxiliary printing module (50) further comprises an optic sensor (60) associated with the web conveyance path downstream the auxiliar ink-jet printing unit (10) and downstream the analogue printing unit (20), the optic sensor (60) being configured to measure a first thickness of the first ink (11) or a first measured opacity value of the first ink (11), or a second thickness of the second ink (21) or a second measured opacity value of the second ink (21) printed on the web (51) conveyed through the web conveyance path.

7. The digital printing machine according to claim 5 and 6 wherein the control unit (40) is configured to calculate, in a closed loop, adjustments of the adjustment actuators required to reach a predefined target opacity values calculated considering the first or second thickness or the first or second measured opacity values provided by the optic sensor (60) and a given first or second thickness or first or second target opacity value of the first ink (11) and of the second ink (21), and to control said adjustment actuators to implement said adjustments.

8. Operation method of a digital printing machine comprising a main printing module (70) and an auxiliary printing module (50) associated in succession with the same web conveyance path, the method comprising: providing the auxiliary printing module (50) including one auxiliar ink-jet printing unit (10), transversal to a web conveyance path and adapted to print a first ink (11) on a web (51) conveyed through the web conveyance path;
providing the main printing module (70) with a plurality of main ink-jet printing units (80) transversal to the web conveyance path, each feed with an ink (81) of a color different to the first and second inks (11, 21) and adapted to sequentially printing the multiple monochrome images (42);
supplying, to the control unit (40), a polychrome image (41) to be printed composed of multiple monochrome images (42) to be printed overlapped in a predefined order, one of the monochrome images to be printed being an opaque base image (43) to be printed by the auxiliary printing module (50);
**characterized in that** the method further comprises:
the auxiliary printing module (50) is provided further including one analogue printing unit (20), transversal to the web conveyance path and adapted to print a second ink (21), of the same color than the first ink, on the web (51) conveyed through the web conveyance path, and at least one auxiliar drying/curing unit (30) downstream the auxiliar ink-jet printing unit (10) and the analogue printing unit (20);
selecting a printing configuration of the auxiliary printing module (50) between a first printing configuration, where the opaque base image (43) is printed solely with the auxiliar ink-jet printing unit (10) with the first ink (11) while the analogue printing unit (20) is disabled, and a second printing configuration where the opaque base image (43) is printed solely with the analogue printing unit (20) with the second ink (21) while the auxiliar ink-jet printing unit (10) is disabled, and
implementing, or implementing after confirmation by an operator, the selected printing configuration.

9. The method according to claim 8 wherein the method further comprises supplying to the control unit (40), or calculating by the control unit (40), first ink thickness of the first ink (11) and second ink thickness of the second ink (21) required to reach a given target opacity value of the opaque base image (43), and wherein the implementation of the first printing configuration comprises printing the first ink (11) with first ink thickness and wherein the implementation of the second printing configuration comprises printing the second ink (21) with second ink thickness.

10. The method according to claim 9 wherein the first ink thickness and the second ink thickness are automatically calculated by the control unit (40) considering the given target opacity value of the opaque base image (43) and a given first thickness/opacity factor of the first ink (11) and a given second thickness/opacity factor of the second ink (21).

11. The method according to claim 9 or 10 wherein the method comprises calculating, by the control unit (40), an estimated printing cost of the opaque base image (43) using the first ink (11) and using the second ink (21) considering at least:
surface area of each copy of the opaque base image (43) to be printed, given to the control unit (40) or calculated by the control unit (40) through the analysis of the opaque base image (43);
first cost per volume unit or per weight unit of the first ink (11) and a second cost per volume unit or per weight unit of a second ink (21), given to the control unit (40);
and wherein the printing configuration selected is the most cost-effective configuration between the first printing configuration and the second printing configuration considering the estimated printing cost.

12. The method according to claim 11 wherein the estimated printing cost of the analogue printing unit using the second ink (21) is calculated considering also a given printing sleeve preparation cost for the analogue printing unit (20), and a number of copies of the opaque base image (43) to be printed, given to the control unit (40).

13. The method according to claim 11 or 12 wherein the estimated printing cost is calculated also considering a drying estimated cost which is calculated, by the control unit (40), considering the surface area of the opaque base image (43), the first and second thickness of the first and second inks (11, 21) and a first drying cost per thickness unit of the first ink (11) to be dried by the at least one auxiliar drying/curing unit (30) and a second drying cost per thickness unit of the second ink (21) to be dried by the at least one auxiliar drying/curing unit (30) given to the control unit (40).

14. The method according to any preceding claim 8 to 13 wherein the step of implementing the selected first or second printing configuration includes governing, by the control unit (40), adjustment actuators integrated in the auxiliar ink-jet printing unit (10) and in the analogue printing unit (20), the adjustment actuators being actuators adapted to modify the thickness of the first and second inks (11, 21) printed by auxiliar ink-jet printing unit (10) and in the analogue printing unit (20), to achieve the first ink thickness or the second ink thickness.

15. The method according to claim 14 wherein the method further comprises:
obtaining, from an optic sensor (60) associated with the web conveyance path downstream the auxiliar ink-jet printing unit (10) and the analogue printing unit (20), a first thickness of the first ink (11), a first measured opacity value of the first ink (11), a second thickness of the second ink (21) and/or a second measured opacity value of the second ink (21) printed on the web (51) conveyed through the web conveyance path by the auxiliary printing module (50); and
implementing, by the control unit (40), adjustments of the adjustment actuators required to reach the target opacity values calculated in a closed loop considering the first or second thickness and/or the first or second measured opacity values provided by the optic sensor (60).
